# EUROPEAN PATENT SPECIFICATION

(11) **EP 1 715 150 B1**
(45) Date of publication and mention of the grant of the patent: **24.07.2013**
(21) Application number: 05719101.7
(22) Date of filing: 14.02.2005
(51) Int. Cl.: F01N 3/02, F01N 3/24, F01N 9/00, F01N 11/00, F02B 37/007

(54) **EXHAUST GAS PURIFYING DEVICE AND EXHAUST GAS PURIFYING METHOD IN INTERNAL COMBUSTION ENGINE**
ABGASREINIGUNGSVORRICHTUNG UND ABGASREINIGUNGSVERFAHREN IN VERBRENNUNGSMOTOREN
DISPOSITIF DE PURIFICATION DE GAZ D'ECHAPPEMENT ET METHODE DE PURIFICATION DE GAZ D'ECHAPPEMENT DANS UN MOTEUR A COMBUSTION INTERNE

(30) Priority: 12.02.2004 JP 2004035495
(43) Date of publication of application: 25.10.2006
(73) Proprietor: KABUSHIKI KAISHA TOYOTA JIDOSHOKKI, Kariya-shi, Aichi 448-8671 (JP)
(72) Inventor: NARITA, Yuji, c/o Kabushiki Kaisha Toyota, Kariya-shi, Aichi 4488671 (JP); TAKAHASHI, Yoshiyuki, c/o Kabushiki Kaisha, Kariya-shi, Aichi 4488671 (JP); IMAI, Takeshi, c/o Kabushiki Kaisha Toyota, Kariya-shi, Aichi 4488671 (JP); SUZUKI, Hisanobu, c/o Toyota Jidosha, Aichi 4718571 (JP); NAKAMURA, Yoshitaka, c/o Toyota Jidosha, Aichi 4718571 (JP)
(74) Representative: TBK
(86) International application number: PCT/JP2005/002160
(87) International publication number: WO 2005/078247

(56) References cited:
- JP-A- 6 137 133
- JP-A- 2003 074 328
- JP-A- 2003 138 976
- JP-A- 2004 019 529
- JP-U- 61 084 851
- US-A- 5 853 459
- US-A1- 2003 230 077

## Description

### TECHNICAL FIELD

The present invention relates to an exhaust gas purifying device and an exhaust gas purifying method in an internal combustion engine including multiple collectors for collecting unclean substances included in exhaust gas in parallel.

### BACKGROUND ART

A configuration providing a collector for collecting unclean substances (black smoke particles, nitrogen oxides and the like) in exhaust gas generated in an internal combustion engine on an exhaust passage is disclosed in Patent Documents 1 and 2 for instance. Patent Document 1 discloses a technique of heating and burning off collected black smoke particles in order to regenerate a collecting function of a filter for collecting the black smoke particles. Patent Document 2 discloses a technique of detecting a temperature of the exhaust gas in downstream parts of a NOx catalyst with a temperature sensor and increasing the temperature of the NOx catalyst based on this temperature detection result in order to regenerate the NOx catalyst.

When controlling the temperature of the collector based on the temperature of the exhaust gas, it is possible to estimate energy of the exhaust gas by using the temperature of the exhaust gas detected by the temperature sensor so as to estimate the temperature of the collector from the estimated exhaust gas energy. The exhaust gas energy is acquired from a product of the temperature of the exhaust gas and an air flow rate sent into the internal combustion engine. The air flow rate reflects an exhaust gas flow. In the case where there is a single exhaust path and the collector is on the exhaust path, the air flow rate correctly reflects the exhaust gas flow on the single exhaust path so that a value of the exhaust gas energy is correctly estimated.

However, in the case where the collector is provided to each of the multiple exhaust paths placed in parallel and there are variations in exhaust resistance of the exhaust paths, that is, in the case where there are variations in the exhaust gas flow, it is not possible to estimate the exhaust gas energy in each of the exhaust paths correctly. To be more specific, the exhaust gas energy in each of the exhaust paths can be acquired by the product of the value acquired by dividing the detected air flow rate by the number of the exhaust paths and the temperature of the exhaust gas. In the case where there are variations in the exhaust gas flows in the multiple exhaust paths, however, the value acquired by dividing the air flow rate by the number of the exhaust paths does not correctly reflect the exhaust gas flow in each of the exhaust paths.
[Patent Document 1] Japanese Laid-Open Patent No. 58-28505
[Patent Document 2] Japanese Laid-Open Patent No. 11-117786
[Patent Document 3] US 2003 230077 A1
[Patent Document 4] US 5 853 459 A

In document US 2003 230077 A1, in an exhaust gas filter purifying system, the exhaust gas flow rate is calculated based on the intake airflow rate, the filter temperature and the pressure difference.

In document US 5 853 459 A, in an exhaust gas filter purifying apparatus, a temperature detecting means, a heating means, and a pressure differential detecting means are used.

### DISCLOSURE OF THE INVENTION

### PROBLEMS TO BE SOLVED BY THE INVENTION

An object of the present invention is to correctly estimate the exhaust gas flows in the exhaust paths corresponding to multiple collectors for collecting unclean substances included in the exhaust gas respectively, and to provide a respective exhaust gas purifying device and an exhaust gas purifying method.

### Disclosure of the Invention

### MEANS FOR SOLVING THE PROBLEMS

The foregoing object is solved by an exhaust gas purifying device as defined in claim 1. An exhaust gas purifying method is defined in claim 7. Further developments are stated in the dependent claims.

According to the present invention, a state of having a large differential pressure between upstream and downstream of a collector reflects a state in which the collector has a large exhaust gas flow while a state of having a small differential pressure between upstream and downstream of the collector reflects a state in which the collector has a small exhaust gas flow. If the differential pressure between upstream and downstream of a certain collector is larger than the differential pressure between upstream and downstream of another collector, the flow rate estimating means then estimates that the exhaust gas flow of the exhaust path corresponding to the former collector is more than the exhaust gas flow of the exhaust path corresponding to the latter collector. Therefore, even in the case where there are variations in exhaust resistance of the multiple exhaust paths, the exhaust gas flow rates of the exhaust paths corresponding to the multiple collectors are correctly estimated. The correctly estimated exhaust gas flow rates are used when estimating the exhaust gas energy or when equalizing the exhaust gas flow rates of the exhaust paths.

The flow rate estimating means may also estimate the exhaust gas flow rates when the unclean substances collected by the collectors are completely removed from the collectors by a regeneration process of the collectors. The regeneration process of the collectors is a process of removing the unclean substances collected by the collectors from the collectors. A state in which the unclean substances are not collected by the collectors is an appropriate state for exploring the variations in the exhaust resistance of the exhaust paths.

The exhaust gas purifying device may include energy estimating means for estimating the exhaust gas energy of each of the exhaust paths based on the exhaust gas flow rate of a corresponding exhaust path estimated by the flow rate estimating means.

In the case where the differential pressure between upstream and downstream of a certain collector is larger than the differential pressure between upstream and downstream of another collector, the flow rate estimating means estimates that the exhaust gas flow rate of the exhaust path corresponding to the former collector is more than the exhaust gas flow rate of the exhaust path corresponding to the latter collector. And the energy estimating means estimates that the exhaust gas energy corresponding to the former collector is larger than the exhaust gas energy corresponding to the latter collector. Therefore, even in the case where there are variations in exhaust resistance of the multiple exhaust paths, each of the exhaust gas energy corresponding to the multiple collectors is correctly estimated.

The energy estimating means may include flow rate detecting means for detecting an air flow rate led into the internal combustion engine and temperature estimating means for estimating a temperature of exhaust gas.

The air flow rate corresponding to the exhaust gas flow passing through multiple collectors is grasped from the air flow rate detected by the flow rate detecting means. For instance, the air flow rate corresponding to the exhaust gas flow of the multiple collectors is acquired by dividing the entire air flow rate by the number of the collectors. Hereunder, the exhaust gas energy acquired by a product of the air flow rate thus acquired and an estimated temperature of the exhaust gas is referred to as an estimated exhaust gas energy initial value. For instance, the energy estimating means corrects the estimated exhaust gas energy initial value based on the differential pressure information respectively obtained by the multiple differential pressure detecting means.

A pair of the collectors may be provided, and the energy estimating means may estimate the exhaust gas energy corresponding to the collectors respectively based on the two differential pressures detected by the differential pressure detecting means respectively corresponding to the pair of collectors.

In the case where there is a difference between the differential pressure of one collector and the differential pressure of the other collector, the energy estimating means, for instance, corrects the estimated exhaust gas energy initial value correspondingly to the one collector and also corrects the estimated exhaust gas energy initial value correspondingly to the other collector. In the case where the differential pressure of the one collector is larger than the differential pressure of the other collector, the exhaust gas energy corrected correspondingly to the one collector has a larger value than the exhaust gas energy corrected correspondingly to the other collector.

The internal combustion engine may include a supercharger for supercharging air to the internal combustion engine by using the exhaust gas flow. In the case where there are variations in supercharging performance of the supercharger, the present invention is suitable for application to the exhaust gas purifying device in the internal combustion engine including the supercharger.

### BRIEF DESCRIPTION OF THE DRAWINGS

Fig. 1 is a diagram showing the entirety of an exhaust gas purifying device according to a first embodiment;
Figs. 2 (a) and (b) are timing charts showing changes in differential pressures;
Fig. 3 is a flowchart showing a correction control program;
Fig. 4 is a flowchart showing a correction control program according to a second embodiment;
Fig. 5 is a flowchart showing the correction control program;
Fig. 6 is a diagram showing an exhaust gas purifying device;
Fig. 7 is a diagram showing an exhaust gas purifying device according to a third embodiment; and
Fig. 8 is a flowchart showing a correction control program.

### BEST MODE FOR CARRYING OUT THE INVENTION

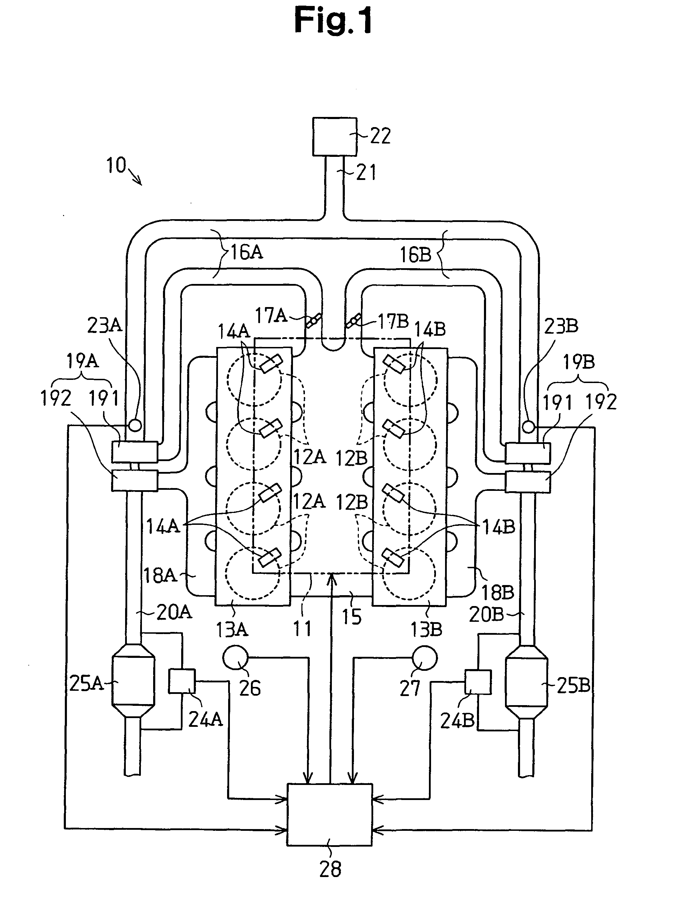

A first embodiment according to the present invention will be described below with reference to Figs. 1 to 3.

As shown in Fig. 1, an internal combustion engine 10 includes multiple cylinders 12A and 12B, and the multiple cylinders 12A and 12B are divided into two groups. A cylinder head 13A corresponding to the cylinders 12A of the first group has a fuel injection nozzle 14A mounted thereon for each of the cylinders 12A. A cylinder head 13B corresponding to the cylinders 12B of the second group has a fuel injection nozzle 14B mounted thereon for each of the cylinders 12B. The fuel injection nozzles 14A and 14B inject fuel into the corresponding cylinders 12A and 12B. Reference numeral 11 denotes a fuel injection device including the fuel injection nozzles 14A and 14B.

The cylinder heads 13A and 13B have an intake manifold 15 connected thereto. The intake manifold 15 is connected to first and second branched intake passages 16A and 16B. A compressor portion 191 of a first supercharger 19A is provided in the middle of the first branched intake passage 16A, and a compressor portion 191 of a second supercharger 19B is provided in the middle of the second branched intake passage 16B. The first and second superchargers 19A and 19B are heretofore known variable-nozzle turbochargers actuated by an exhaust gas stream.

The first and second branched intake passages 16A and 16B are connected to a basic intake passage 21. The basic intake passage 21 is connected to an air cleaner 22. A throttle valve 17A is provided in the portion of the branched intake passage 16A between the first supercharger 19A and the intake manifold 15. A throttle valve 17B is provided in the portion of the branched intake passage 16B between the second supercharger 19B and the intake manifold 15. The throttle valves 17A and 17B adjust the air flow rate led into the corresponding branched intake passages 16A and 16B by way of the air cleaner 22 and the basic intake passage 21. The throttle valves 17A and 17B have their openings adjusted in conjunction with operation of an accelerator pedal not shown.

The amount of depression of the accelerator pedal is detected by an accelerator pedal detector 26. The rotation angle (crank angle) of the crankshaft (not shown) is detected by a crank angle detector 27. The depression amount detection information obtained by the accelerator pedal detector 26 and the crank angle detection information obtained by the crank angle detector 27 are sent to a control computer 28. The control computer 28 controls an injection starting time and an injection ending time of the fuel injection nozzles 14A and 14B based on the depressing amount detection information and the crank angle detection information.

The air led into the basic intake passage 21 shunts into the branched intake passages 16A and 16B, and the air flowing in the branched intake passages 16A and 16B joins together in the intake manifold 15. To be more specific, intake air sent out of the compressor portions 191 of the first and second superchargers 19A and 19B joins together in the intake manifold 15 to be supplied to the cylinders 12A and 12B. The branched intake passages 16A and 16B are designed to have a mutually equal air flow rate.

A first exhaust manifold 18A is connected to the cylinder head 13A while a second exhaust manifold 18B is connected to the cylinder head 13B. The first exhaust manifold 18A is connected to a first exhaust passage 20A via a turbine portion 192 of the first supercharger 19A. The second exhaust manifold 18B is connected to a second exhaust passage 20B via the turbine portion 192 of the second supercharger 19B. The exhaust gas discharged from the cylinders 12A and 12B is emitted into the atmosphere by way of the corresponding exhaust manifolds 18A and 18B and exhaust passages 20A and 20B. The first exhaust manifold 18A and first exhaust passage 20A configure a first exhaust path while the second exhaust manifold 18B and second exhaust passage 20B configure a second exhaust path. The first exhaust manifold 18A and first exhaust passage 20A and the second exhaust manifold 18B and second exhaust passage 20B are designed to have a mutually equal exhaust gas flow rate of the exhaust paths.

A first airflow meter 23A as flow rate detecting means or a flow rate detector for detecting the air flow rate is placed on the first branched intake passage 16A upstream from the compressor portion 191 of the first supercharger 19A. A second airflow meter 23B as the flow rate detecting means or flow rate detector for detecting the air flow rate is placed on the second branched intake passage 16B upstream from the compressor portion 191 of the second supercharger 19B. The first airflow meter 23A detects the air flow rate in the first branched intake passage 16A while the second airflow meter 23B detects the air flow rate in the second branched intake passage 16B.

A first collector 25A is provided on the first exhaust passage 20A, and a second collector 25B is provided on the second exhaust passage 20B. The first and second collectors 25A and 25B are the collectors for collecting black smoke particles (unclean substance) included in the exhaust gas.

A first differential pressure detector 24A is connected to the first exhaust passage 20A while a second differential pressure detector 24B is connected to the second exhaust passage 20B. The first differential pressure detector 24A is differential pressure detecting means for detecting a pressure difference between an upstream side and a downstream side of the first collector 25A. The second differential pressure detector 24B is the differential pressure detecting means for detecting the pressure difference between the upstream side and the downstream side of the second collector 25B.

Information on a first air flow rate F1 detected by the first airflow meter 23A and information on a second air flow rate F2 detected by the second airflow meter 23B are sent to the control computer 28. Information on a first differential pressure ΔP1 detected by the first differential pressure detector 24A and information on a second differential pressure ΔP2 detected by the second differential pressure detector 24B are sent to the control computer 28.

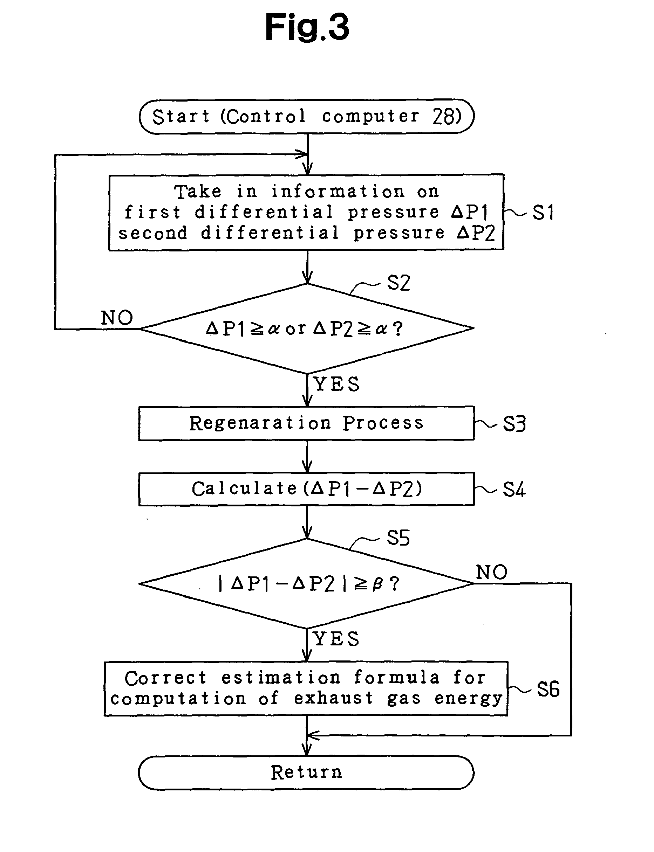

The control computer 28 executes a correction control program shown in the flowchart of Fig. 3. Correction control will be described below based on the flowchart of Fig. 3. The internal combustion engine 10 is in operating condition.

In step S1, the control computer 28 takes in the information for the first differential pressure ΔP1 and second differential pressure ΔP2 at a predetermined frequency. In step S2, the control computer 28 determines whether or not the first differential pressure ΔP1 or the second differential pressure ΔP2 is a preset threshold α (α > 0) or more. In the case where neither the first differential pressure ΔP1 nor the second differential pressure ΔP2 has reached the threshold α (NO in step S2), the control computer 28 moves on to step S1. In the case where the first differential pressure ΔP1 or the second differential pressure ΔP2 is the threshold α or more (YES in step S2), the control computer 28 proceeds to step S3 and performs a predetermined regeneration process.

The predetermined regeneration process is a process of increasing the temperature of the exhaust gas in order to regenerate the collecting function of the collectors 25A and 25B. It is implemented by extending the fuel injection period of the fuel injection nozzles 14A and 14B and thereby increasing the fuel injection amount. To regenerate the collecting function of the collectors 25A and 25B, it is necessary to heat the collectors 25A and 25B to 600°C or so, for instance, in order to burn off the black smoke particles collected by the collectors 25A and 25B. For that reason, the control computer 28 estimates an exhaust gas temperature Tx of the exhaust passages 20A and 20B based on engine speed information and fuel injection period information calculated from crank angle detection information obtained by the crank angle detector 27 and air flow rate information obtained by the airflow meters 23A and 23B and the like. The control computer 28 and the airflow meters 23A and 23B configure temperature estimating means or a temperature estimating portion for estimating the temperature of the exhaust gas.

The control computer 28 calculates an average value (F1 + F2)/2 of the air flow rates F1 and F2 detected by the airflow meters 23A and 23B respectively and a product [(F1 + F2)/2] × Tx thereof with the estimated exhaust gas temperature Tx. The average value (F1 + F2)/2 reflects a basic exhaust gas flow of each of the exhaust passages 20A and 20B. To be more specific, a basic value of the exhaust gas flow of each of the exhaust passages 20A and 20B is acquired based on the value acquired by dividing the air flow rate led into the internal combustion engine 10 by the number of the exhaust passages 20A and 20B. The product [(F1 + F2)/2] × Tx represents an estimate value of exhaust gas energy (hereafter, referred to as an exhaust gas energy initial value). For this reason, the airflow meters 23A, 23B and the control computer 28 also configure the estimating means or estimating portion for estimating the exhaust gas energy initial value.

The exhaust gas energy initial value reflects the temperature in the collectors 25A and 25B. The control computer 28 controls fuel injection to generate the exhaust gas energy capable of setting the temperature in the collectors 25A and 25B at the temperature necessary to burn off the black smoke particles collected by the collectors 25A and 25B (600°C for instance). Such a regeneration process is performed for a predetermined time period.

Upon finishing the regeneration process, the control computer 28 calculates the difference (ΔP1 - ΔP2) between the first differential pressure ΔP1 and the second differential pressure ΔP2 in step S4. In step S5, the control computer 28 determines whether or not an absolute value of the calculated difference (ΔP1 - ΔP2) is a predetermined threshold β (β > 0) or more. In the case where the absolute value of the difference (ΔP1 - ΔP2) is the threshold β or more (YES in step S5), the control computer 28 corrects an estimation formula for computation [(F1 + F2)/2] × Tx for acquiring the exhaust gas energy initial value in step S6.

In the case of ΔP1 > ΔP2, the estimation formula for computation [(F1 + F2)/2] × Tx is corrected as γ × [(F1 + F2)/2] × Tx (provided that γ is a positive number satisfying 2 > γ > 1) for instance so as to correspond to the first collector 25A. This is on the ground that the exhaust gas flow rate of the first exhaust passage 20A having the first collector 25A provided thereon is equivalent to γ × [(F1 + F2)/2]. Furthermore, the estimation formula for computation [(F1 + F2) /2] × Tx is corrected as (2 - γ) × [(F1 + F2)/2 ] × Tx for instance so as to correspond to the second collector 25B. This is on the grounds that the exhaust gas flow rate of the second exhaust passage 20B having the second collector 25B provided thereon is equivalent to (2 - γ) × [(F1 + F2)/2]. To be more specific, the control computer 28 estimates the exhaust gas flow rate of the respective exhaust paths having the first collector 25A and the second collector 25B provided thereon based on each piece of differential pressure information obtained by the multiple differential pressure detecting means.

Conversely, in the case of ΔP1 < ΔP2, the estimation formula for computation [(F1 + F2)/2] × Tx is corrected as δ × [(F1 + F2)/2] × Tx (provided that δ is a positive number below 1) for instance so as to correspond to the first collector 25A. Furthermore, the estimation formula for computation [(F1 + F2)/2] × Tx is corrected as (2 - 5) × [(F1 + F2)/2] × Tx for instance so as to correspond to the second collector 25B. The values of γ and δ are set according to a size of the absolute value of (ΔP1 - ΔP2).

The control computer 28 also configures a flow rate estimating means or a flow rate estimating portion for estimating an exhaust gas flow rate of each of the exhaust paths having the first collector 25A and the second collector 25B provided thereon. The control computer 28 uses the estimation formula for computation corrected as above on the next regeneration process. To be more specific, the corrected estimation formula for computation is used for estimation of the exhaust gas energy on the next regeneration process.

In the case where the absolute value of the difference (ΔP1 - ΔP2) is below the threshold β (NO in step S5), the control computer 28 does not correct the estimation formula for computation [(F1 + F2)/2] × Tx. The control computer 28 uses the estimation formula for computation [(F1 + F2)/2] × Tx on the next regeneration process. To be more specific, the uncorrected estimation formula for computation is used for estimation of the exhaust gas energy on the next regeneration process.

The control computer 28 determines whether or not to correct the exhaust gas energy initial value correspondingly to the collectors 25A and 25B, and corrects and estimates the exhaust gas energy initial value if determined that the correction is necessary. The airflow meters 23A, 23B and the control computer 28 function to estimate the exhaust gas energy.

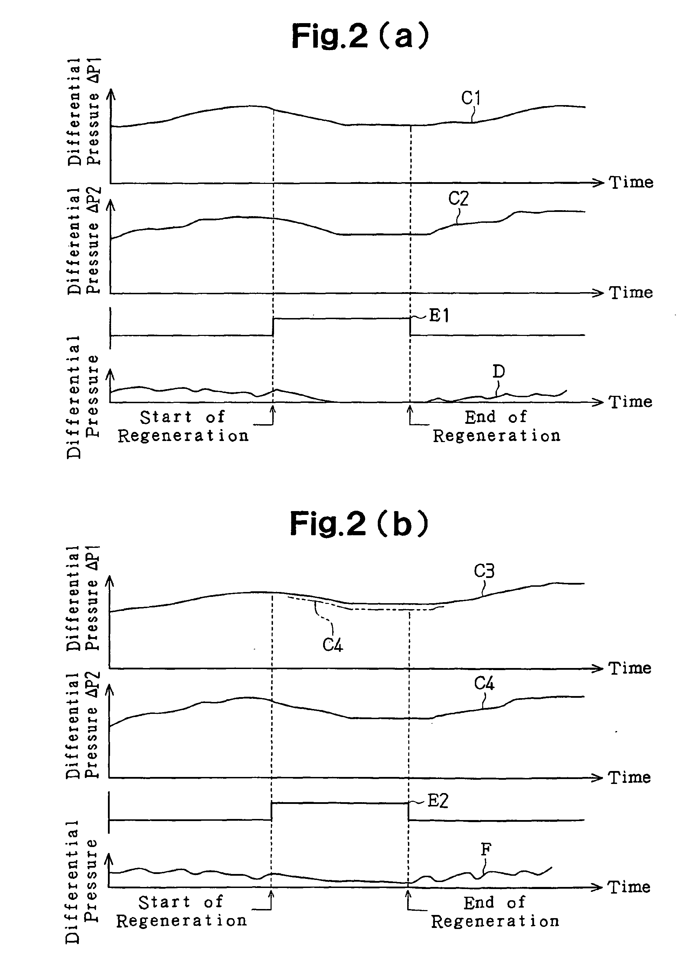

The first embodiment has the following effects.
(1 - 1) The state of having a large differential pressure ΔP1 between upstream and downstream of the first collector 25A reflects the state of having a large exhaust gas flow of the first collector 25A, that is, the first exhaust passage 20A. The state of having a large differential pressure ΔP2 between upstream and downstream of the second collector 25B reflects the state of having a large exhaust gas flow rate of the second collector 25B, that is, the second exhaust passage 20B. Conversely, the state of having a small differential pressure ΔP1 between upstream and downstream of the first collector 25A reflects the state of having a small exhaust gas flow rate of the first collector 25A, that is, the first exhaust passage 20A. The state of having a small differential pressure ΔP2 between upstream and downstream of the second collector 25B reflects the state of having a small exhaust gas flow rate of the second collector 25B, that is, the second exhaust passage 20B.
   The first exhaust manifold 18A and first exhaust passage 20A and the second exhaust manifold 18B and second exhaust passage 20B are designed to have a mutually equal exhaust gas flow rate. Because of variations in manufacturing, however, there may arise a difference between exhaust resistance in the first exhaust path from the first exhaust manifold 18A to the first exhaust passage 20A and the exhaust resistance in the second exhaust path from the second exhaust manifold 18B to the second exhaust passage 20B. In that case, there arises a difference between the exhaust gas flow rate of the first exhaust path (18A, 20A) and the exhaust gas flow rate of the second exhaust path (18B, 20B).
   In the case where there is a difference between the exhaust resistance in the first exhaust path (18A, 20A) and the exhaust resistance in the second exhaust path (18B, 20B), there arises a difference between the differential pressure ΔP1 between upstream and downstream of the first collector 25A and the differential pressure ΔP2 between upstream and downstream of the second collector 25B. To be more specific, there arises a difference between the exhaust gas flow rate of the first collector 25A, that is, the first exhaust passage 20A and the exhaust gas flow rate of the second collector 25B, that is, the second exhaust passage 20B.
   Curve C1 in a timing chart of Fig. 2 (a) shows an example of a change in the first differential pressure ΔP1 detected by the first differential pressure detector 24A. Curve C2 shows an example of a change in the second differential pressure ΔP2 detected by the second differential pressure detector 24B. Curve D shows a change in the difference (|ΔP1 - ΔP2|) between the first differential pressure ΔP1 and the second differential pressure ΔP2. Line E1 shows execution and a stop of the regeneration process. The timing chart of Fig. 2 (a) indicates that there is no difference between the first differential pressure ΔP1 and the second differential pressure ΔP2 (that is, |ΔP1 - ΔP2| < β) upon finishing the execution of the regeneration process.
   Curve C3 in a timing chart of Fig. 2 (b) shows an example of a change in the first differential pressure ΔP1 detected by the first differential pressure detector 24A. Curve C4 shows an example of a change in the second differential pressure ΔP2 detected by the second differential pressure detector 24B. Curve F shows a change in the difference (|ΔP1 - ΔP2|) between the first differential pressure ΔP1 and the second differential pressure ΔP2. Line E2 shows execution and a stop of the regeneration process. The timing chart of Fig. 2 (b) indicates the case where there is a difference between the first differential pressure ΔP1 and the second differential pressure ΔP2 (that is, |ΔP1 - ΔP2| ≥ β) upon finishing the execution of the regeneration process.
   Fig. 2(b) shows the case where the differential pressure ΔP1 between upstream and downstream of the first collector 25A is larger than the differential pressure ΔP2 between upstream and downstream of the second collector 25B. In this case, the control computer 28 corrects and increases the exhaust gas energy initial value correspondingly to the first collector 25A, and also corrects and reduces the exhaust gas energy initial value correspondingly to the second collector 25B. Conversely, in the case where the differential pressure ΔP1 between upstream and downstream of the first collector 25A is smaller than the differential pressure ΔP2 between upstream and downstream of the second collector 25B, the control computer 28 corrects and reduces the exhaust gas energy initial value correspondingly to the first collector 25A, and also corrects and increases the exhaust gas energy initial value correspondingly to the second collector 25B. Therefore, even in the case where there is a difference between the exhaust resistance in the first exhaust path (18A, 20A) and the exhaust resistance in the second exhaust path (18B, 20B), the exhaust gas energy is correctly estimated correspondingly to the collectors 25A and 25B respectively.
(1 - 2) As shown in Figs. 2(a) and 2(b), there is a difference between the first differential pressure ΔP1 and the second differential pressure ΔP2 before executing the regeneration process. This is because there is a difference between an amount of deposition of the black smoke particles in the first collector 25A and the amount of deposition of the black smoke particles in the second collector 25B. For that reason, it is not desirable to correct the exhaust gas energy initial value in such a state. After the regeneration process, it is presumably in the state of having the black smoke particles as the unclean substance mostly removed. The state in which the black smoke particles are not collected by the collectors 25A and 25B, that is, the state immediately after the regeneration process is an appropriate state in exploring whether or not there is a difference between the exhaust resistance in the exhaust path having the first collector 25A provided thereon and the exhaust resistance in the exhaust path having the second collector 25B provided thereon.
(1 - 3) In the case where there are variations in supercharging performance of the superchargers 19A and 19B, there arises a difference in passing resistance of the exhaust gas (exhaust resistance) in the turbine portion 192 of the superchargers 19A and 19B. An exhaust gas purifying device in the internal combustion engine including multiple superchargers and having a difference in the exhaust resistance is suitable as an application subject of the present invention.
(1 - 4) According to the first embodiment, it is determined whether or not to correct the estimation formula for computation each time the regeneration process is executed. There are the cases where the black smoke particles in the collectors 25A and 25B are not completely removed even though the regeneration process is executed. If the state of removing the black smoke particles is different between the first collector 25A and the second collector 25B, there is a difference between the exhaust resistance of the first collector 25A and the exhaust resistance of the second collector 25B even after the regeneration process. In the case where the state of removing the black smoke particles in the first collector 25A and the second collector 25B is different as to the regeneration process each time, there is a difference between the exhaust gas flow rate on the first collector 25A side and the exhaust gas flow rate on the second collector 25B side after the regeneration process as to the regeneration process each time. As it is not assured that the state of removing the black smoke particles in the collectors 25A and 25B is always the same after the regeneration process, it is desirable to determine whether or not to correct the estimation formula for computation each time the regeneration process is executed.

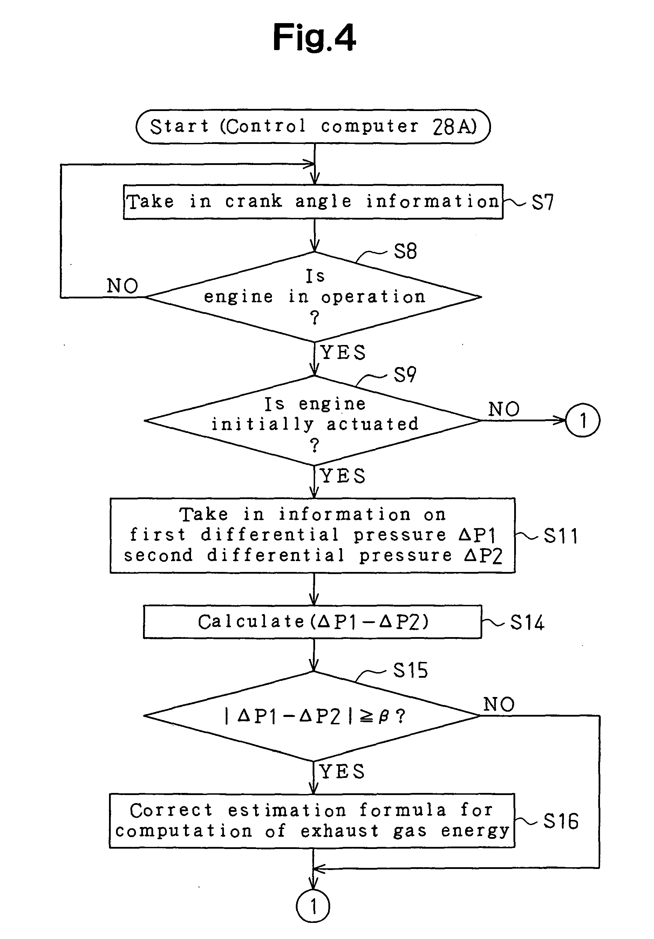

Next, a second embodiment according to the present invention will be described based on Figs. 4 to 6. The same component portions as the first embodiment will be indicated by using the same symbols as the first embodiment and a description thereof will be omitted.

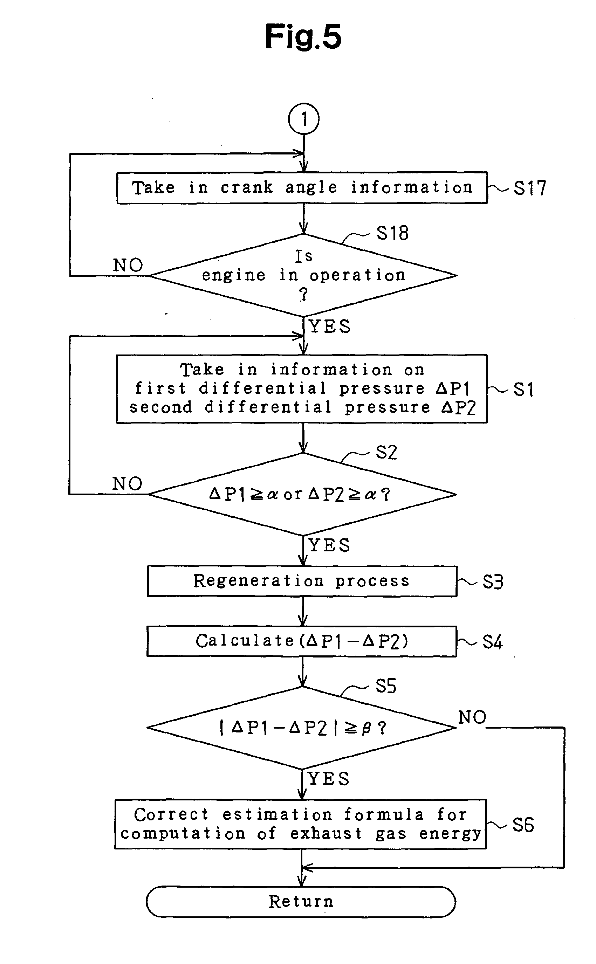

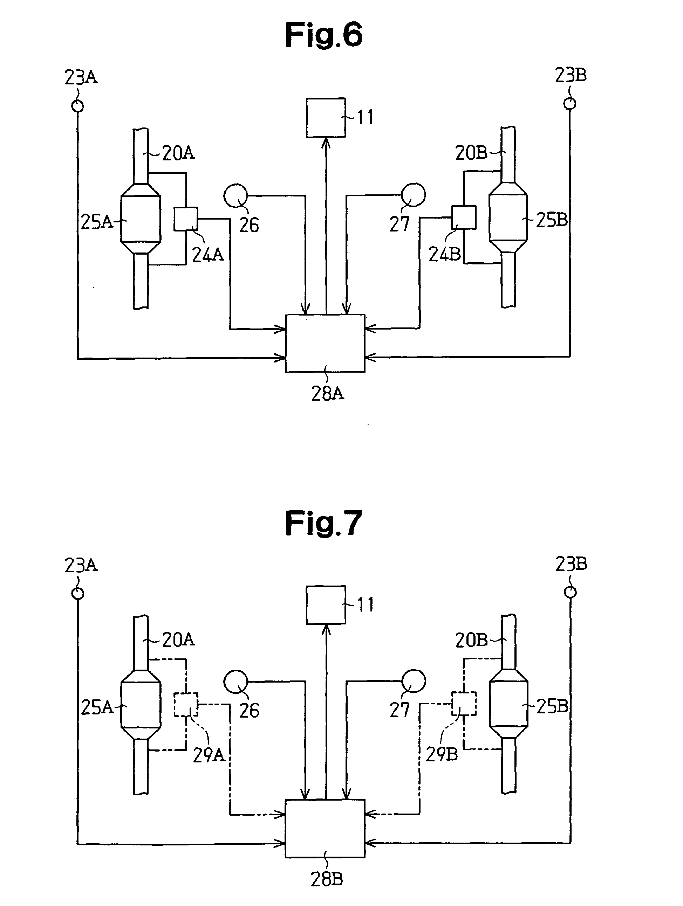

A control computer 28A shown in Fig. 6 executes the correction control program shown in the flowcharts of Figs. 4 and 5. The correction control will be described below based on the flowcharts of Figs. 4 and 5.

As shown in Fig. 4, in step S7, the control computer 28A takes in the crank angle detection information detected by the crank angle detector 27. In step S8, the control computer 28A determines whether or not the crankshaft is rotating, that is, whether or not the engine is in operation based on the crank angle detection information. In the case where the engine is not in operation (NO in step S8), the control computer 28A moves on to step S7. In the case where the engine is in operation (YES in step S8), the control computer 28A determines whether or not the crankshaft is rotating for the first time, that is, whether or not the engine is initially actuated in step S9.

In the case where the engine is initially actuated (YES in step S9), the control computer 28A moves on to step S11. Step S11 is the same process as step S1 of the first embodiment. In step S14, the control computer 28A calculates a difference (ΔP1 - ΔP2) between the first differential pressure ΔP1 and the second differential pressure ΔP2. In step S15, the control computer 28A determines whether or not an absolute value of the calculated difference (ΔP1 - ΔP2) is the threshold β (β > 0) or more. In the case where the absolute value of the difference (ΔP1 - ΔP2) is the threshold β or more (YES in step S15), the control computer 28A corrects the estimation formula for computation [(F1 + F2)/2] × Tx in step S16. In the case where the absolute value of the difference (ΔP1 - ΔP2) is below the threshold β (NO in step S15), the control computer 28A does not correct the estimation formula for computation [(F1 + F2)/2] × Tx.

As shown in Fig. 5, after the process of step S15 or S16, the control computer 28A takes in the crank angle detection information detected by the crank angle detector 27 in step S17. In step S18, the control computer 28A determines whether or not the crankshaft is rotating, that is, whether or not the engine is in operation based on the crank angle detection information. In the case where the engine is not in operation (NO in step S18), the control computer 28A moves on to step S17. In the case where the engine is in operation (YES in step S18), the control computer 28A moves on to the process of steps S1 to S6. The process of steps S1 to S6 is the same as the process of steps S1 to S6 of the first embodiment.

After the process of step S5 or S6, the control computer 28A moves on to step S17. As with the control computer 28 of the first embodiment, the control computer 28A has the functions of estimating the exhaust gas temperature and estimating the exhaust gas energy as well as the function of estimating the exhaust gas flow rate. The control computer 28A uses the corrected estimation formula for computation on the next regeneration process in the case where the estimation formula for computation is corrected, and uses the uncorrected estimation formula for computation on the next regeneration process in the case where the estimation formula for computation is not corrected.

According to the second embodiment, when actuating the internal combustion engine 10 for the first time, it is determined whether or not to correct the estimation formula for computation for acquiring the exhaust gas energy initial value based on the difference between the first differential pressure ΔP1 and the second differential pressure ΔP2. As the black smoke particles are not deposited in the collectors 25A and 25B when the internal combustion engine 10 is initially actuated, it is correctly determined whether or not to correct the estimation formula for computation for acquiring the exhaust gas energy initial value.

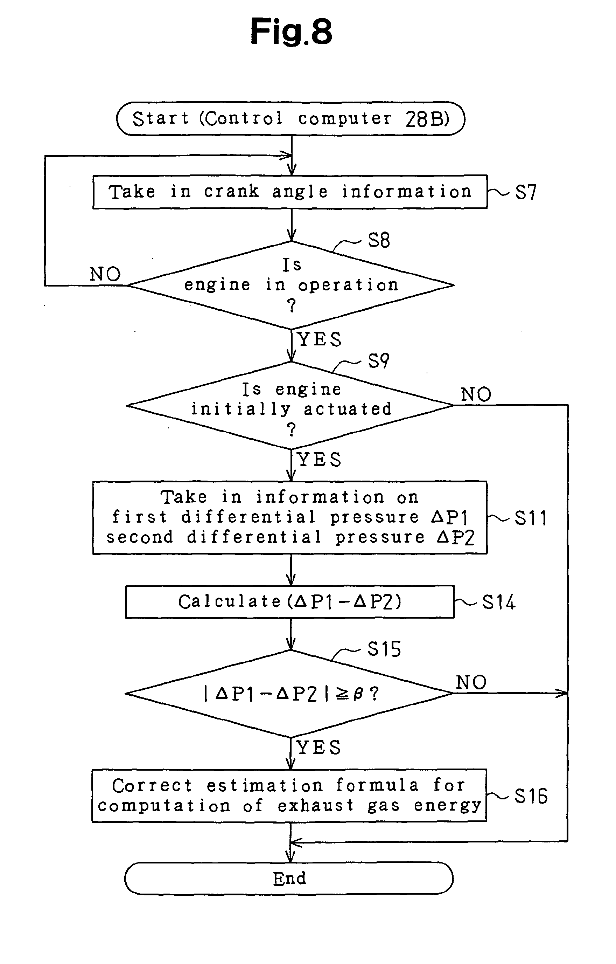

Next, a third embodiment according to the present invention will be described based on Figs. 7 and 8. The same component portions as the second embodiment will be indicated by using the same symbols as the second embodiment and a description thereof will be omitted.

Differential pressure detectors 29A and 29B shown in Fig. 7 are mounted on the exhaust passages 20A and 20B in an examination process before product shipment, and are not mounted on a shipped product. In the examination process before the product shipment, a control computer 28B executes the correction control program shown in the flowchart of Fig. 8. The correction control program shown in the flowchart of Fig. 8 is the program for executing the same processes as steps S7 to S9, S11 and S14 to S16 of the second embodiment. To be more specific, it is determined whether or not to correct the estimation formula for computation for acquiring the exhaust gas energy initial value only when the engine is initially actuated.

As with the control computer 28 of the first embodiment, the control computer 28B has the function of estimating the exhaust gas temperature and the function of estimating the exhaust gas energy as well as the function of estimating the exhaust gas flow rate. In the case where the estimation formula for computation is corrected, the corrected estimation formula for computation is used in all the cases thereafter. In the case where the estimation formula for computation is not corrected, the uncorrected estimation formula for computation is used in all the cases thereafter. As the third embodiment does not require the differential pressure detector for each of the products, product cost can be reduced compared to the cases of the first and second embodiments.

The following embodiments are also possible according to the present invention.
(1) In the first embodiment, it can be determined whether or not to correct the estimation formula for computation only when the engine is initially actuated or only immediately after the first regeneration process.
(2) In the first embodiment, it is also possible to detect the air flow rate in the basic intake passage 21. In this case, half the detected air flow rate is used for the estimation formula for computation. This configuration requires only one airflow meter.
(3) The present invention is also applicable to an exhaust gas purifying device in the internal combustion engine including no supercharger 19A and 19B.
(4) The present invention is also applicable to the exhaust gas purifying device in the internal combustion engine including the collector consisting of a NOx catalyst for collecting NOx (unclean substance), a SOx catalyst for collecting SOx (unclean substance) or a three-way catalyst.
(5) The present invention is also applicable for exhaust gas purifying device in an internal combustion engine including three or more collectors in parallel.
(6) It is also possible to adjust each of the embodiments so as to equalize the exhaust gas flow rates of the exhaust paths based on the exhaust gas flow rates of the exhaust paths estimated from the exhaust gas flow rates. According to this configuration, it is no longer necessary to correct the estimation formula for computation.

For that purpose, it may be configured to provide the intake manifolds to individual banks separately and make an adjustment by controlling the throttle valves provided to the intake manifolds separately so as to equalize the exhaust gas flow rates of the exhaust paths. It also may be configured to provide a flow rate regulating valve on each of the exhaust paths and adjust the opening of the flow rate regulating valve so as to equalize the exhaust gas flow rates of the exhaust paths.

## Claims

1. An exhaust gas purifying device in an internal combustion engine (10) including a plurality of exhaust paths (18A, 20A, 18B, 20B) placed in parallel, comprising:
a plurality of collectors (25A, 25B) for collecting unclean substances included in exhaust gas, the collectors (25A, 25B) being respectively provided to the exhaust paths (18A, 20A, 18B, 20B);
a plurality of differential pressure detecting means (24A, 24B) for detecting a differential pressure between upstream and downstream of each of the collectors (25A, 25B);
flow rate estimating means (28) for estimating an exhaust gas flow rate of each of the exhaust paths (18A, 20A, 18B, 20B) based on differential pressure information respectively obtained by the differential pressure detecting means (24A, 24B); and
calculating means (28) for acquiring a basic value of the exhaust gas flow rate of each of the exhaust paths (18A, 20A, 18B, 20B) based on a value acquired by dividing the air flow rate led into the internal combustion engine (10) by the number of the exhaust paths (18A, 20A, 18B, 20B),
wherein the flow rate estimating means (28) estimates the exhaust gas flow rates when the unclean substances are completely removed from the collectors (25A, 25B) by a regeneration process of the collectors (25A, 25B),
wherein the flow rate estimating means (28) acquires the exhaust gas flow rates by correcting each of the basic values based on differential pressure information respectively obtained by the differential pressure detecting means (24A, 24B), and
wherein the flow rate estimating means (28) determines whether or not to correct the basic value based on variations in differential pressures respectively obtained by the differential pressure detecting means (24A, 24B).

2. The exhaust gas purifying device according to claim 1, wherein the flow rate estimating means (28) estimates the exhaust gas flow rates without executing the regeneration process when the internal combustion engine (10) is initially actuated.

3. The exhaust gas purifying device according to any one of claims 1 and 2, comprising energy estimating means (23A, 23B, 28) for estimating the exhaust gas energy of each of the exhaust paths (18A, 20A, 18B, 20B) based on the exhaust gas flow rate of a corresponding exhaust path estimated by the flow rate estimating means (28).

4. The exhaust gas purifying device according to claim 3, wherein the energy estimating means (23A, 23B, 28) includes flow rate detecting means (23A, 23B) for detecting an air flow rate led into the internal combustion engine (10) and temperature estimating means (28) for estimating a temperature of exhaust gas.

5. The exhaust gas purifying device according to one of claims 3 and 4, in which a pair of the collectors (25A, 25B) is provided, and the energy estimating means (23A, 23B, 28) estimates the exhaust gas energy respectively corresponding to the collectors (25A, 25B) based on the two differential pressures detected by the differential pressure detecting means (24A, 24B) respectively corresponding to the pair of collectors (25A, 25B).

6. The exhaust gas purifying device according to any one of claims 1 to 5, wherein the internal combustion engine (10) includes a supercharger (19A, 19B) for supercharging air to the internal combustion engine (10) by using the exhaust gas flow.

7. An exhaust gas purifying method for an internal combustion engine (10) including a plurality of exhaust paths (18A, 20A, 18B, 20B) placed in parallel, comprising:
collecting unclean substances included in exhaust gas with a plurality of collectors (25A, 25B) respectively provided to the exhaust paths (18A, 20A, 18B, 20B);
detecting a differential pressure between upstream and downstream of each of the multiple collectors (25A, 25B);
estimating an exhaust gas flow of each of the exhaust paths (18A, 20A, 18B, 20B) based on the detected differential pressure information;
acquiring a basic value of the exhaust gas flow of each of the exhaust paths (18A, 20A, 18B, 20B) based on a value acquired by dividing the air flow rate led into the internal combustion engine (10) by the number of the exhaust paths (18A, 20A, 18B, 20B); and
acquiring the exhaust gas flow rates by correcting each of the basic values based on differential pressure information respectively obtained by differential pressure detecting means (24A, 24B).

## Patentansprüche

1. Abgasreinigungsvorrichtung in einem Verbrennungsmotor (10), der eine Vielzahl an Abgaspfaden (18A, 20A, 18B, 20B) hat, die parallel angeordnet sind, mit:
einer Vielzahl an Sammeleinrichtungen (25A, 25B) zum Sammeln unreiner Substanzen, die in dem Abgas enthalten sind, wobei die Sammeleinrichtungen (25A, 25B) jeweils an den Abgaspfaden (18A, 20A, 18B, 20B) vorgesehen sind;
einer Vielzahl an Druckdifferenzerfassungseinrichtungen (24A, 24B) zum Erfassen einer Druckdifferenz zwischen der stromaufwärtigen Seite und der stromabwärtigen Seite von jeder der Sammeleinrichtungen (25A, 25B);
einer Strömungsratenabschätzeinrichtung (28) zum Abschätzen einer Abgasströmungsrate von jedem der Abgaspfade (18A, 20A, 18B, 20B) auf der Basis der Druckdifferenzinformation, die jeweils durch die Druckdifferenzerfassungseinrichtung (24A, 24B) erlangt wurde; und
einer Berechnungseinrichtung (28) zum Erlangen eines Basiswerts der Abgasströmungsrate von jedem der Abgaspfade (18A, 20A, 18B, 20B) auf der Basis eines Wertes, der erlangt wird durch ein Dividieren der Luftströmungsrate, die in den Verbrennungsmotor (10) geleitet wird, durch die Anzahl der Abgaspfade (18A, 20A, 18B, 20B),
wobei die Strömungsratenabschätzeinrichtung (28) die Strömungsraten abschätzt, wenn die unreinen Substanzen vollständig von den Sammeleinrichtungen (25A, 25B) durch einen Regenerationsprozess der Sammeleinrichtungen (25A, 25B) entfernt worden sind,
wobei die Strömungsratenabschätzeinrichtung (28) die Abgasströmungsraten erlangt durch ein Korrigieren von jedem der Basiswerte auf der Basis der Druckdifferenzinformation, die jeweils durch die Druckdifferenzerfassungseinrichtung (24A, 24B) erlangt worden ist, und
wobei die Strömungsratenabschätzeinrichtung (28) auf der Basis von Schwankungen der Druckdifferenzen, die jeweils durch die Druckdifferenzerfassungseinrichtung (24A, 24B) erlangt werden, bestimmt, ob der Basiswert korrigiert wird oder nicht.

2. Abgasreinigungsvorrichtung gemäß Anspruch 1, wobei die Strömungsratenabschätzeinrichtung (28) die Abgasströmungsraten ohne ein Ausführen des Regenerationsprozesses abschätzt, wenn der Verbrennungsmotor (10) anfänglich betätigt ist.

3. Abgasreinigungsvorrichtung gemäß einem der Ansprüche 1 oder 2 mit einer Energieabschätzeinrichtung (23A, 23B, 28) zum Abschätzen der Abgasenergie von jedem der Abgaspfade (18A, 20A, 18B, 20B) auf der Basis der Abgasströmungsrate eines entsprechenden Abgaspfades, die durch die Strömungsratenabschätzeinrichtung (28) abgeschätzt wird.

4. Abgasreinigungsvorrichtung gemäß Anspruch 3, wobei die Energieabschätzeinrichtung (23A, 23B, 28) eine Strömungsratenerfassungseinrichtung (23A, 23B) zum Erfassen einer in den Verbrennungsmotor (10) geleiteten Luftströmungsrate und eine Temperaturabschätzeinrichtung (28) zum Abschätzen einer Temperatur des Abgases aufweist.

5. Abgasreinigungsvorrichtung gemäß einem der Ansprüche 3 oder 4, bei der ein Paar der Sammeleinrichtungen (25A, 25B) vorgesehen ist, und die Energieabschätzeinrichtung (23A, 23B, 28) die Abgasenergie jeweils entsprechend der Sammeleinrichtungen (25A, 25B) auf der Basis der beiden Druckdifferenzen abschätzt, die durch die Druckdifferenzerfassungseinrichtung (24A, 24B) jeweils entsprechend dem Paar der Sammeleinrichtungen (25A, 25B) erfasst werden.

6. Abgasreinigungsvorrichtung gemäß einem der Ansprüche 1 bis 5, wobei der Verbrennungsmotor (10) eine Aufladeeinrichtung (19A, 19B) zum Aufladen der Luft zu dem Verbrennungsmotor (10) unter Verwendung der Abgasströmung hat.

7. Abgasreinigungsverfahren für einen Verbrennungsmotor (10) mit einer Vielzahl an Abgaspfaden (18A, 20A, 18B, 20B), die parallel angeordnet sind, mit den folgenden Schritten:
Sammeln unreiner Substanzen, die in dem Abgas enthalten sind, mit einer Vielzahl an Sammeleinrichtungen (25A, 25B), die jeweils an den Abgaspfaden (18A, 20A, 18B, 20B) vorgesehen sind;
Erfassen einer Druckdifferenz zwischen der stromaufwärtigen Seite und der stromabwärtigen Seite von jeder der mehreren Sammeleinrichtungen (25A, 25B);
Abschätzen einer Abgasströmung von jedem der Abgaspfade (18A, 20A, 18B, 20B) auf der Basis der erfassten Druckdifferenzinformation;
Erlangen eines Basiswerts der Abgasströmung von jedem der Abgaspfade (18A, 20A, 18B, 20B) auf der Basis eines Werts, der erlangt wird durch ein Teilen der Luftströmungsrate, die in den Verbrennungsmotor (10) geleitet wird, durch die Anzahl der Abgaspfade (18A, 20A, 18B, 20B); und
Erlangen der Abgasströmungsraten durch ein Korrigieren von jedem der Basiswerte auf der Basis der Druckdifferenzinformation, die jeweils durch die Druckdifferenzerfassungseinrichtung (24A, 24B) erlangt wird.

## Revendications

1. Dispositif de purification de gaz d'échappement dans un moteur à combustion interne (10) comportant une pluralité de chemins d'échappement (18A, 20A, 18B, 20B) placés en parallèle, comprenant :
une pluralité de collecteurs (25A, 25B) pour collecter des substances impures contenues dans le gaz d'échappement, les collecteurs (25A, 25B) étant respectivement prévus aux chemins d'échappement (18A, 20A, 18B, 20B) ;
une pluralité de moyens de détection de pression différentielle (24A, 24B) destinés à détecter une pression différentielle entre l'amont et l'aval de chacun des collecteurs (25A, 25B) ;
un moyen d'estimation de débit (28) destiné à estimer un débit de gaz d'échappement de chacun des chemins d'échappement (18A, 20A, 18B, 20B) sur la base des informations sur la pression différentielle obtenues respectivement par les moyens de détection de pression différentielle (24A, 24B) ; et
un moyen de calcul (28) destiné à obtenir une valeur de base du débit de gaz d'échappement de chacun des chemins d'échappement (18A, 20A, 18B, 20B) sur la base d'une valeur obtenue en divisant le débit d'air conduit dans le moteur à combustion interne (10) par le nombre des chemins d'échappement (18A, 20A, 18B, 20B),
dans lequel le moyen d'estimation de débit (28) estime les débits de gaz d'échappement lorsque les substances impures sont complètement retirées des collecteurs (25A, 25B) par un processus de régénération des collecteurs (25A, 25B),
dans lequel le moyen d'estimation de débit (28) obtient les débits de gaz d'échappement par la correction de chacune des valeurs de base sur la base des informations sur la pression différentielle obtenues respectivement par les moyens de détection de pression différentielle (24A, 24B), et
dans lequel le moyen d'estimation de débit (28) détermine s'il faut corriger la valeur de base sur la base de variations des pressions différentielles obtenues respectivement par les moyens de détection de pression différentielle (24A, 24B) ou non.

2. Dispositif de purification de gaz d'échappement selon la revendication 1, dans lequel le moyen d'estimation de débit (28) estime les débits de gaz d'échappement sans exécution du processus de régénération lorsque le moteur à combustion interne (10) est initialement actionné.

3. Dispositif de purification de gaz d'échappement selon l'une quelconque des revendications 1 et 2, comprenant un moyen d'estimation d'énergie (23A, 23B, 28) pour estimer l'énergie de gaz d'échappement de chacun des chemins d'échappement (18A, 20A, 18B, 20B) sur la base du débit de gaz d'échappement d'un chemin d'échappement correspondant estimé par le moyen d'estimation de débit (28).

4. Dispositif de purification de gaz d'échappement selon la revendication 3, dans lequel le moyen d'estimation d'énergie (23A, 23B, 28) comporte un moyen de détection de débit (23A, 23B) pour détecter un débit d'air conduit dans le moteur à combustion interne (10) et un moyen d'estimation de température (28) pour estimer une température de gaz d'échappement.

5. Dispositif de purification de gaz d'échappement selon l'une des revendications 3 et 4, dans lequel une paire des collecteurs (25A, 25B) est prévue, et le moyen d'estimation d'énergie (23A, 23B, 28) estime l'énergie de gaz d'échappement correspondant respectivement aux collecteurs (25A, 25B) sur la base des deux pressions différentielles détectées par les moyens de détection de pression différentielle (24A, 24B) correspondant respectivement à la paire de collecteurs (25A, 25B).

6. Dispositif de purification de gaz d'échappement selon l'une quelconque des revendications 1 à 5, dans lequel le moteur à combustion interne (10) comporte un compresseur à suralimentation (19A, 19B) pour suralimenter de l'air au moteur à combustion interne (10) en utilisant le flux de gaz d'échappement.

7. Procédé de purification de gaz d'échappement pour un moteur à combustion interne (10) comportant une pluralité de chemins d'échappement (18A, 20A, 18B, 20B) placés en parallèle, comprenant le fait :
de collecter des substances impures contenues dans le gaz d'échappement par une pluralité de collecteurs (25A, 25B) respectivement prévus aux chemins d'échappement (18A, 20A, 18B, 20B) ;
de détecter une pression différentielle entre l'amont et l'aval de chacun des plusieurs collecteurs (25A, 25B) ;
d'estimer un flux de gaz d'échappement de chacun des chemins d'échappement (18A, 20A, 18B, 20B) sur la base des informations sur la pression différentielle détectées ;
d'obtenir une valeur de base du flux de gaz d'échappement de chacun des chemins d'échappement (18A, 20A, 18B, 20B) sur la base d'une valeur obtenue en divisant la débit d'air conduit dans le moteur à combustion interne (10) par le nombre des chemins d'échappement (18A, 20A, 18B, 20B) ; et
d'obtenir les débits de gaz d'échappement par la correction de chacune des valeurs de base sur la base des informations sur la pression différentielle obtenues respectivement par les moyens de détection de pression différentielle (24A, 24B).
